# EUROPÄISCHE PATENTANMELDUNG

(11) **EP 1 245 258 A2**
(43) Veröffentlichungstag der Anmeldung: **02.10.2002**
(21) Anmeldenummer: 02450026.6
(22) Anmeldetag: 07.02.2002
(51) Int. Cl.: B01D 29/23, B01D 29/64, B01D 29/66, B01D 35/16

(54) **Einrichtung zur Reinigung, insbesondere zur Filterung von Flüssigkeiten**

(30) Priorität: 26.03.2001 AU 4832001
(71) Anmelder: BWT AKTIENGESELLSCHAFT, 5310 Mondsee (AT)
(72) Erfinder: Binggl, Gerd, 5310 Mondsee (AT)
(74) Vertreter: Atzwanger, Richard, Dipl.-Ing. Patentanwalt

(57) **Zusammenfassung**

Einrichtung zur Reinigung, insbesondere zur Filterung, von Flüssigkeiten, wie Wasser, bestehend aus einem einen Filtereinsatz (3) enthaltendes Gehäuse (1), welches mit Öffnungen (11, 12) für die Zuleitung und für die Ableitung der Flüssigkeit sowie mit einer Spülöffnung (14) ausgebildet ist, wobei weiters im Gehäuse (1) ein durch eine Stellstange (4) verstellbarer Ventilkörper (14) vorgesehen ist, in dessen offenen Stellungen eine Rückspülung des Filtereinsatzes (3) erfolgt und die Flüssigkeit mit dem ausgefilterten Material durch die Spülöffnung (14) hindurch ausgetragen wird. Dabei ist der Stellstange (4) eine Rückstellfeder (5) zugeordnet und ist die Stellstange (4) entgegen der Wirkung der Rückstellfeder (5) zur Öffnung des Ventiles und zur Rückspülung des Filtereinsatzes (3) verschiebbar (Fig. 1).

## Beschreibung

Die gegenständliche Erfindung betrifft eine Einrichtung zur Reinigung, insbesondere zur Filterung, von Flüssigkeiten, wie Wasser, bestehend aus einem einen Filtereinsatz enthaltenden Gehäuse, welches mit Anschlüssen für die Zuleitung und für die Ableitung der Flüssigkeit sowie mit einer Spülöffnung ausgebildet ist, wobei weiters im Gehäuse ein durch eine Stellstange verstellbarer Ventilkörper vorgesehen ist, in dessen offenen Stellungen eine Rückspülung des Filtereinsatzes erfolgt und die Flüssigkeit mit dem ausgefilterten Material durch die Spülöffnung hindurch ausgetragen wird.

Bei bekannten derartigen Einrichtungen ist die Stellstange mit radial abragenden, plattenförmigen Elementen ausgebildet, welche mit Kanälen versehen sind, an welche mindestens ein Rückspülkanal anschließt. Durch eine axiale Verstellung der Stellstange wird einerseits das Ventil betätigt, wodurch die Spülöffnung freigegeben wird und werden andererseits die plattenförmigen Elemente längs der Innenseite des Filtereinsatzes verschoben, wodurch mittels der zugeführten Flüssigkeit die angestrebte Reinigung des Filtereinsatzes erfolgt und das ausgefilterte Material durch die Spülöffnung hindurch aus dem Gehäuse ausgetragen wird.

Bei den bekannten Einrichtungen ist die Stellstange mit einem Gewinde versehen, wobei deren axiale Verstellung durch deren Verdrehung in einem im Gehäuse vorgesehenen Gegengewinde erfolgt. Diese Ausbildung ist deshalb nachteilig, da das hierfür erforderliche Gewinde und das diesem zugeordnete Gegengewinde einen großen fertigungstechnischen Aufwand erfordern, da die Gewinde infolge von Verschmutzungen in ihrer Funktion beeinträchtigt werden können, da weiters die Stellgeschwindigkeit relativ gering ist, wodurch ein großer Verbrauch an Spülflüssigkeit bedingt wird und da eine automatische Verstellung nur mit einem hohen technischen Aufwand möglich ist.

Der gegenständlichen Erfindung liegt somit die Aufgabe zugrunde, eine derartige Einrichtung zu schaffen, bei welcher die der bekannten Einrichtung anhaftenden Nachteile vermieden werden. Dies wird erfindungsgemäß dadurch erzielt, daß der Stellstange eine Rückstellfeder zugeordnet ist und daß die Stellstange entgegen der Wirkung der Rückstellfeder zur Öffnung des Ventiles und zur Rückspülung des Filtereinsatzes verschiebbar ist.

Vorzugsweise ist die Stellstange, welche das angenähert zylindrisch ausgebildete Gehäuse in dessen Längsrichtung durchsetzt und an ihrem einen Ende mit einem Stellgriff ausgebildet ist sowie mit ihrem anderen Ende in die Spülöffnung einragt, in dem dem Stellgriff zugeordneten Bereich mit einem Anschlag ausgebildet, wobei sich die Stellfeder zwischen der Innenwand des Gehäuses und dem Anschlag befindet. Weiters kann die Stellstange an ihrem der Spülöffnung zugeordneten Ende mit einem der Spülöffnung zugeordneten Dichtungselement ausgebildet sein.
Nach weiteren bevorzugten Merkmalen sind an der Stellstange mehrere im Abstand voneinander angeordnete, plattenförmige Elemente vorgesehen, deren äußerer Rand an die Innenfläche des Filterelementes anliegt und welche mit Kanälen ausgebildet sind, an welche mindestens ein längs der Stellstange verlaufender Spülkanal anschließt, welcher nahe der Spülöffnung mündet. Insbesondere ist die Stellstange durch einen Stab gebildet, an dessen einem Ende der Betätigungsknopf und an dessen anderem Ende das Dichtungselement angeordnet sind. Weiters kann die Stellstange von einer Hülse umgeben sein, welche in ihrem der Spülöffnung zugeordneten Ende hohlzylindrisch ausgebildet ist, wobei dem hohlzylindrischen Bereich im Innenraum des Gehäuses eine Dichtung zugeordnet ist.

Der Gegenstand der Erfindung ist nachstehend anhand eines in der Zeichnung dargestellten Ausführungsbeipieles näher erläutert. Es zeigen:
- Fig. 1: eine erfindungsgemäße Einrichtung in der ersten Betriebsstellung und in einem axialen Längsschnitt,
- Fig. 2: die Einrichtung gemäß Fig. 1 in einem um 90° versetzten, zweiten axialen Längsschnitt,
- die Fig. 3: ein Detail der Fig. 2, in einer gegenüber dieser vergrößerten Darstellung,
- die Fig. 3a, 3b und 3c: die Schnitte gemäß den Linien A-A, B-B und C-C der Fig. 3, und
- Fig. 4: die Einrichtung gemäß Fig. 1, in einer zweiten Betriebsstellung und im ersten axialen Längsschnitt.

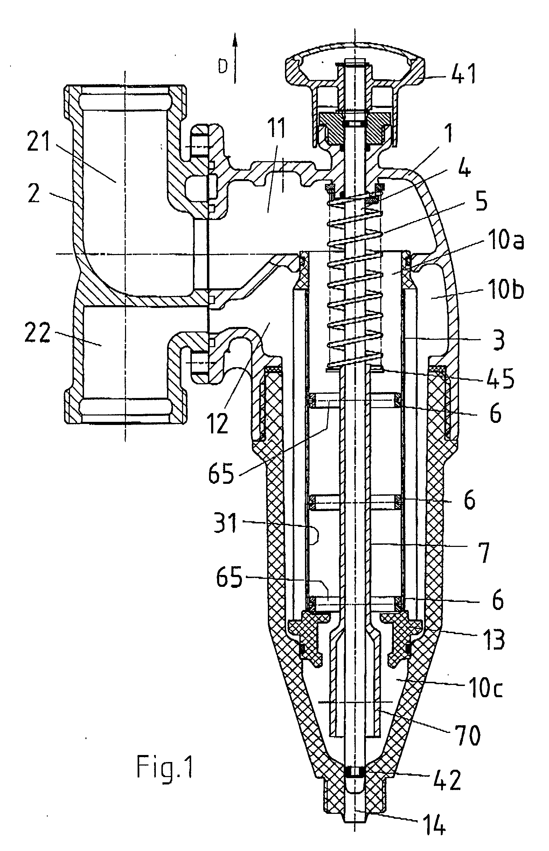

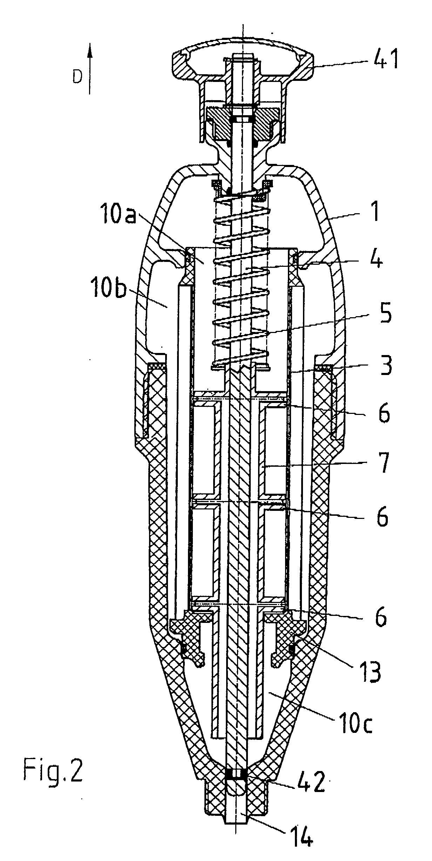

Die in den Fig. 1 und 2 dargestellte Einrichtung besteht aus einem zweiteiligen, zylinderartigen Gehäuse 1 mit Öffnungen 11 und 12, an welches ein Anschlußstück 2 angesetzt ist, dessen Zuflußrohr 21 der Eintrittsöffnung 11 zugeordnet ist und dessen Abflußrohr 22 der Austrittsöffnung 12 zugeordnet ist. Im Innenraum des Gehäuses 1 befindet sich ein Filtereinsatz 3, durch welchen der Innenraum in zwei Bereiche 10a und 10b unterteilt wird. Weiters ist das Gehäuse 1 von einer Stellstange 4 durchsetzt, welche an ihrem oberen Ende mit einem Stellgriff 41 ausgebildet ist und deren unteres Ende mit einem Dichtungselement 42 versehen ist, durch welches eine am unteren Ende des Gehäuses 1 vorgesehene Spülöffnung 14 verschließbar bzw. freigebbar ist. Über die Länge der Stellstange 4 ist diese mit drei plattenförmigen Elementen 6 ausgebildet, welche von der Stellstange 4 radial abragen und deren äußere Stirnflächen an die Innenfläche 31 des Filtereinsatzes 3 anliegen.
In ihrem oberen Bereich ist die Stellstange 4 von einer Schraubendruckfeder 5 umgeben, welche einerseits an die Innenfläche des Gehäuses 1 und andererseits an einen an der Stellstange 4 vorgesehenen Anschlag 45 anliegt. Unterhalb der Schraubendruckfeder 5 ist die Stellstange 4 von einer Hülse 7 umgeben, welche mit den plattenförmigen Elementen 6 zusammenwirkt.
Am unteren Ende des Innenraumes des Gehäuses 1 ist ein Dichtungsring 13 vorgesehen, welchem ein zylindrischer Teil 70 der Hülse 7 zugeordnet ist.

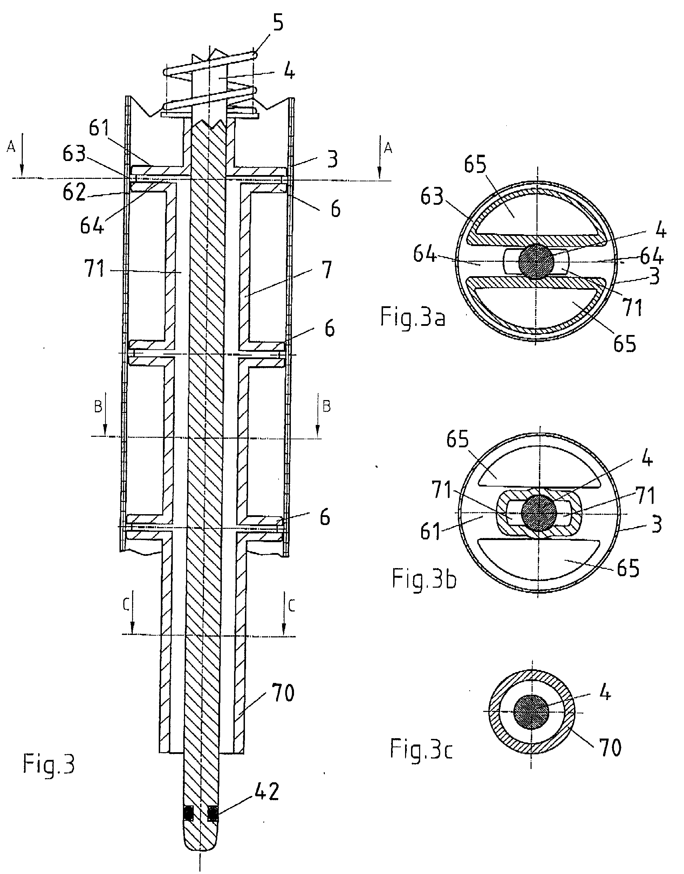

Wie dies weiters aus den Fig. 3, 3a, 3b und 3c ersichtlich ist, bestehen die plattenförmigen Elemente 6 aus zwei Platten 61 und 62, zwischen welchen sich ein äußerer Ringkanal 63 befindet, wobei an den Ringkanal 63 zwei radial verlaufende Kanäle 64 anschließen. Die Kanäle 64 gehen in zwei innerhalb der Hülse 7 befindliche Längskanäle 71 über und münden in einem unterhalb der Dichtung 13 befindlichen Raum 10c. Weiters sind die plattenförmigen Elemente 6 mit Ausnehmungen 65 ausgebildet.

Die Funktion dieser Einrichtung ist wie folgt:
Das Zuflußrohr 21 ist an das Versorgungsnetz angeschlossen und über das Abflußrohr 22 ist unter Einschaltung eines Sperrventiles ein Verbraucher angeschlossen. Sobald das Sperrventil geöffnet wird, strömt über das Zuflußrohr 21 und die Zuflußöffnung 11 Flüssigkeit, insbesondere Wasser, in den inneren Raum 10a ein, wobei sie durch die in den plattenförmigen Elementen 66 befindlichen Ausnehmungen 65 hindurchströmt. Weiters tritt sie durch den Filtereinsatz 3 hindurch, strömt sie durch den äußeren Raum 10b ein und strömt sie durch die Abflußöffnung 12 und das Abflußrohr 22 ab. Durch den Filtereinsatz 3 werden im Medium enthaltene Verunreinigungen, Schadstoffe, Fremdkörper u.dgl. ausgefiltert.

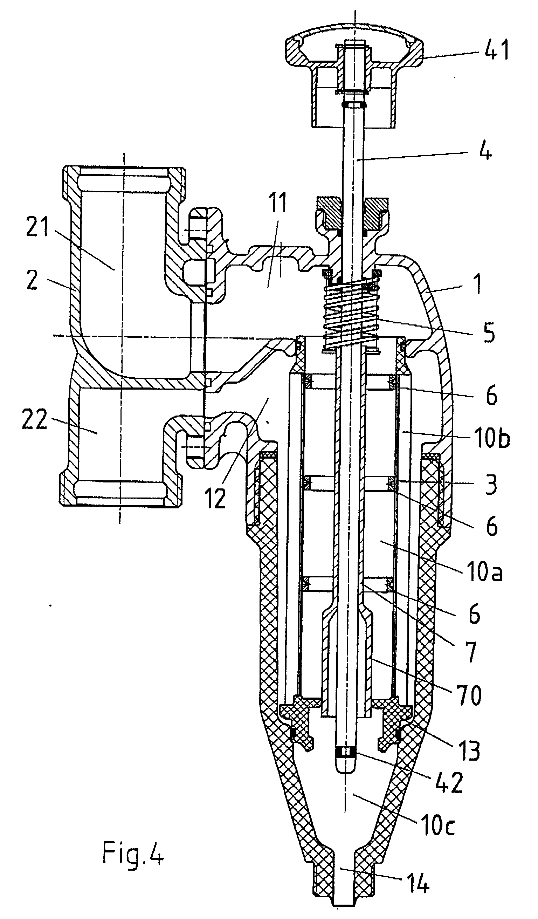

Sobald eine Reinigung des Filterkörpers 3 von den in diesem enthaltenen Verunreinigungen usw. erfolgen soll, wird die Stellstange 4 mittels des Stellgriffes 41 entgegen der Wirkung der Rückstellfeder 5 in Richtung des Pfeiles D verschoben. Die Endstellung dieser Verschiebung ist in Fig. 4 dargestellt.
Durch den Beginn dieser Verschiebung wird die Spülöffnung 14 vom Dichtungskörper 42 freigegeben, wodurch aus dem inneren Raum 10a Flüssigkeit zwischen der Hülse 7 und dem Dichtungsring 13 in den Raum 10c einströmt und durch die Spülöffnung 14 hindurch abströmt. Hierdurch werden im Raum 10c befindliche Verunreinigungen, wie Sand, aus diesem ausgetragen. Bei einer weiteren Verschiebung der Stellstange 4 gelangt der hohlzylindrische Teil 70 der Hülse 7 in den Bereich des Dichtungsringes 13, wodurch ein weiterer Durchtritt von Flüssigkeit verhindert wird. Vielmehr strömt in der Folge Flüssigkeit durch das Zuflußrohr 21 und die Einströmöffnung 11 in den inneren Raum 10a und durch den Filtereinsatz 3 hindurch in den äußeren Raum 10b. Von diesem strömt die Flüssigkeit wieder durch den Filtereinsatz 3 hindurch in die in den plattenförmigen Elementen 6 befindlichen Ringkanäle 63 und weiters in die radialen Kanäle 64, wobei sie in der Folge durch die axialen Kanäle 71 abströmt und durch die Spülöffnung 14 aus dem Gehäuse 1 austritt. Durch die Verschiebung der Stellstange 4 gleiten die plattenförmigen Elemente 6 längs der Innenfläche 31 des Filtereinsatzes 3 hoch, wodurch dieser über seine gesamte Länge von der Flüssigkeit entgegengesetzt der betriebsmäßigen Strömung durchströmt wird. Durch diese Rückspülung werden die im Filtereinsatz 3 befindlichen Verunreinigungen von diesem gelöst und werden sie durch die Ausspülöffnung 14 hindurch aus dem Gehäuse 1 ausgetragen.

Sobald der Stellknopf 41 freigegeben wird, wird die Stellstange 4 durch die Schraubendruckfeder 5 wieder in ihre Ausgangslage, in welcher die Ausspülöffnung 14 verschlossen ist, zurückverstellt.

Dadurch daß durch eine Verschiebung der Stellstange 4 erfolgt, brauchen kein Gewinde und kein Gegengewinde hergestellt zu werden. Weiters werden durch die Gewinde bedingte Funktionsstörungen vermieden. Zudem kann die lineare Stellbewegung in einfacher Weise automatisiert werden. Schließlich kann durch eine erhöhte Geschwindigkeit in der Verschiebung der Stellstange der Rückspülvorgang verkürzt werden, wodurch die Rückspülzeit und die Menge an Rückspülflüssigkeit herabgesetzt werden.

## Patentansprüche

1. Einrichtung zur Reinigung, insbesondere zur Filterung, von Flüssigkeiten, wie Wasser, bestehend aus einem einen Filtereinsatz (3) enthaltendes Gehäuse (1), welches mit Öffnungen (11, 12) für die Zuleitung und für die Ableitung der Flüssigkeit sowie mit einer Spülöffnung (14) ausgebildet ist, wobei weiters im Gehäuse (1) ein durch eine Stellstange (4) verstellbarer Ventilkörper (14) vorgesehen ist, in dessen offenen Stellungen eine Rückspülung des Filtereinsatzes (3) erfolgt und die Flüssigkeit mit dem ausgefilterten Material durch die Spülöffnung (14) hindurch ausgetragen wird, **dadurch gekennzeichnet, daß** der Stellstange (4) eine Rückstellfeder (5) zugeordnet ist und daß die Stellstange (4) entgegen der Wirkung der Rückstellfeder (5) zur Öffnung des Ventiles und zur Rückspülung des Filtereinsatzes (3) verschiebbar ist.

2. Einrichtung nach Patentanspruch 1, **dadurch gekennzeichnet, daß** die Stellstange (4), welche in an sich bekannter Weise das angenähert zylindrisch ausgebildete Gehäuse (1) in dessen Längsrichtung durchsetzt und an ihrem einen Ende mit einem Stellgriff (41) ausgebildet ist sowie mit ihrem anderen Ende in die Spülöffnung (14) einragt, in dem dem Stellgriff (41) zugeordneten Bereich mit einem Anschlag (45) ausgebildet ist, wobei sich die Stellfeder (5) zwischen der Innenwand des Gehäuses (1) und dem Anschlag (45) befindet.

3. Einrichtung nach einem der Patentansprüche 1 und 2, **dadurch gekennzeichnet, daß** die Stellstange (4) in an sich bekannter Weise an ihrem der Spülöffnung (14) zugeordneten Ende mit einem der Spülöffnung (14) zugeordneten Dichtungselement (42) ausgebildet ist.

4. Einrichtung nach einem der Patentansprüche 1 bis 3, **dadurch gekennzeichnet, daß** an der Stellstange (4) mehrere im Abstand voneinander angeordnete plattenförmige Elemente (6) vorgesehen sind, deren äußerer Rand an die Innenfläche (31) des Filterelementes (3) anliegt und welche mit Kanälen (63, 64) ausgebildet sind, an welche mindestens ein längs der Stellstange (4) verlaufender Spülkanal (71) anschließt, welcher nahe der Spülöffnung (14) mündet.

5. Einrichtung nach einem der Patentansprüche 1 bis 4, **dadurch gekennzeichnet, daß** die Stellstange (4) durch einen Stab gebildet ist, an dessen einem Ende der Betätigungsknopf (41) und an dessen anderem Ende das Dichtungselement (40) angeordnet sind.

6. Einrichtung nach einem der Patentansprüche 1 bis 5, **dadurch gekennzeichnet, daß** die Stellstange (4) von einer Hülse (6) umgeben ist, welche in ihrem der Spülöffnung (14) zugeordneten Ende hohlzylindrisch ausgebildet ist, wobei dem hohlzylindrischen Bereich im Innenraum des Gehäuses (1) eine Dichtung (13) zugeordnet ist.
